(19) Europäisches Patentamt
European Patent Office
Office européen des brevets

(11) **EP 4 220 872 A1**

(12) **EUROPEAN PATENT APPLICATION**
published in accordance with Art. 153(4) EPC

(43) Date of publication:
**02.08.2023 Bulletin 2023/31**

(21) Application number: **21871964.9**

(22) Date of filing: **27.07.2021**

(51) International Patent Classification (IPC):
***H01S 3/067*** (2006.01)

(52) Cooperative Patent Classification (CPC):
**H01S 3/067**

(86) International application number:
**PCT/JP2021/027692**

(87) International publication number:
**WO 2022/064832 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.09.2020 JP 2020159746**

(71) Applicant: **Fujikura Ltd.
Tokyo 135-8512 (JP)**

(72) Inventors:
• **NAKANISHI, Yasuo
Sakura-shi, Chiba 285-8550 (JP)**
• **KITAHARA, Rintaro
Sakura-shi, Chiba 285-8550 (JP)**

(74) Representative: **Plasseraud IP
66, rue de la Chaussée d'Antin
75440 Paris Cedex 09 (FR)**

(54) **FIBER LASER DEVICE**

(57) A fiber laser device includes a first pumping light source that outputs a first pumping light, a second pumping light source that outputs a second pumping light, an amplifying fiber having a core in which an added active element to be excited by the first pumping light and the second pumping light, an HR-FBG that is provided on a first end side of the amplifying fiber, an OC-FBG that is provided on a second end side of the amplifying fiber, combiners to couple the first pumping light and the second pumping light each in the amplifying fiber, an output end that outputs a laser light amplified by the amplifying fiber and passed through the OC-FBG. An absorptivity of the active element at the first wavelength is lower than an absorptivity of the active element at the second wavelength. The first wavelength and the second wavelength are shorter than the wavelength of the laser light, and the first wavelength is longer than the second wavelength.

FIG. 1

EP 4 220 872 A1

**Description**

[Technical Field]

The present invention relates to a fiber laser device.
Priority is claimed on Japanese Patent Application No. 2020-159746, filed September 24, 2020, the content of which is incorporated herein by reference.

[Background Art]

In recent years, attention is being drawn to fiber laser devices by the machining, automotive, and medical fields. For the most part, a fiber laser device includes an amplifying fiber to amplify the laser light, a pair of FBG (Fiber Bragg Grating) provided on both ends of the amplifying fiber, an output end to externally output a laser light (optical signal) that is transmitted through one of the FBGs, and an excitation light source to supply pumping light (excitation light) into the amplifying fiber.

In a fiber laser device such as this, when attention is paid to a method of supplying the pumping light, the method may be classified broadly into a forward excitation type fiber laser device, a backward excitation type fiber laser device, and bidirectional excitation type fiber laser device. The forward excitation type fiber laser device supplies the pumping light from an opposite side of the output end with respect to the amplifying fiber. The backward excitation type fiber laser device supplies the pumping light from a side of the output end with respect to the amplifying fiber. The bidirectional excitation type fiber laser device supplies the pumping light from both the opposite of the output end and from the side of the output end with respect to the amplifying fiber. In Patent Document 1 below, a conventional bidirectional excitation type fiber laser device is disclosed.

[Citation List]

[Patent Documents]

[Patent Document 1] Japanese Unexamined Patent Application, First Publication No. 2018-41792

[Summary of Invention]

[Technical Problem]

Incidentally, it is possible for TMI (Transverse Mode Instability, also known as Thermal Modal Instability) phenomenon to occur in a fiber laser device that uses an amplifying fiber having a plurality of modes. The TMI phenomenon is a phenomenon where, as a power of the pumping light being input into the amplifying fiber is enlarged, due to the effects of heat, a cyclic refractive index difference occurs according to a difference of a propagation constant of a fundamental mode and a higher order mode of a laser light in a core of the amplifying fiber. When this phenomenon occurs, since coupling occurs between the fundamental and the higher order mode, the problem of degradation of a beam quality of the laser light exists.

The present invention has been made in consideration of the above mentioned circumstances, where an object of the present invention is to provide a fiber laser device capable of suppressing a degradation of the beam quality that occurs due to the TMI phenomenon.

[Solution to Problem]

To solve the problem mentioned above, a fiber laser device according to an aspect of the present invention includes a first pumping light source that outputs a first pumping light of a first wavelength, a second pumping light source that outputs a second pumping light of a second wavelength that is different from the first wavelength, an amplifying fiber that includes a core in which an active element is added, the active element to be excited by the first pumping light and the second pumping light, an HR-FBG that is provided in a first end side of the amplifying fiber, an OC-FBG that is provided in a second end side of the amplifying fiber, having a reflectance lower than a reflectance of the HR-FBG, a first coupler that couples the first pumping light to the amplifying fiber from the first end side, a second coupler that couples the second pumping light to the amplifying fiber from the second end side, and an output end that outputs a laser light amplified by the amplifying fiber and passed through the OC-FBG, wherein an absorptivity of the active element at the first wavelength is lower than an absorptivity of the active element at the second wavelength; the first wavelength and the second wavelength are shorter than the wavelength of the laser light, and the first wavelength is longer than the second wavelength.

In the fiber laser device according to an aspect of the present invention, the absorptivity of the active element at the first wavelength that is the wavelength of the pumping light coupled to the amplifying fiber from the first side of the amplifying fiber, is lower than the absorptivity of the active element at the second wavelength that is the wavelength of the pumping light coupled to the amplifying fiber from the second side of the amplifying fiber. The first wavelength and the second wavelength are shorter than the wavelength of the laser light, and the first wavelength is longer than the second wavelength. From this, it is possible to decrease the absorptivity of the pumping light per unit length at the first end side of the amplifying fiber more than the absorptivity of the pumping light per unit length at the second end side of the amplifying fiber. Furthermore, it is possible to suppress the temperature rise of the first end side of the amplifying fiber due to quantum defects by making the first wavelength longer (closer to the wavelength of the laser light) than the second wavelength. As a result, the temperature rise at the first end side of the amplifying fiber is suppressed, making it possible to prevent coupling between the fundamental mode and the higher order mode, which in turn makes it is possible to suppress the degradation of the beam quality due to the TMI phenomenon.

In the fiber laser device according to an aspect of the present invention, the second wavelength may coincide with a wavelength at which the active element has the highest absorptivity.

In the fiber laser device according to an aspect of the present invention, a wavelength at which the active element has the highest absorptivity may be a wavelength between the first wavelength and the second wavelength.

In the fiber laser device according to an aspect of the present invention, the first wavelength and the second wavelength may be longer than a wavelength at which the active element has the highest absorptivity.

In the fiber laser device according to an aspect of the present invention, a difference between the first wavelength and the second wavelength may be more than or equal to 1nm and less than or equal to 5nm.

In the fiber laser device according to an aspect of the present invention, when a power of a pumping light coupled to the amplifying fiber from the first end side and a power of a pumping light coupled to the amplifying fiber from the second end side are the same, a heating value at the first end of the amplifying fiber may be less than a heating value at the second end of the amplifying fiber.

In the fiber laser device according to an aspect of the present invention, a power of a pumping light coupled to the amplifying fiber from the first end side may be less than a power of a pumping light coupled to the amplifying fiber from the second end side.

[Advantageous Effects of Invention]

According to the present invention, it is possible to suppress a degradation of a beam quality that occurs due to the TMI phenomenon.

[Brief Description of Drawings]

FIG. 1 is a view showing the main composition of a fiber laser device according to a first embodiment of the present invention.
FIG. 2 shows an example of an absorption spectrum of an active element added to an amplifying fiber in the first embodiment of the present invention.
FIG. 3 is a view showing the main composition of a fiber laser device according to a third embodiment of the present invention.

[Description of Embodiments]

The fiber laser device of embodiments of the present invention is explained in detail by referencing drawings. Drawings used in the below description have components containing special features that are enlarged to make the explanation thereof easier. The dimensions do not necessarily reflect the true dimensions of the components, nor are the dimensions of the components limited thereto. The present invention is not limited to the below embodiments.

(First Embodiment)

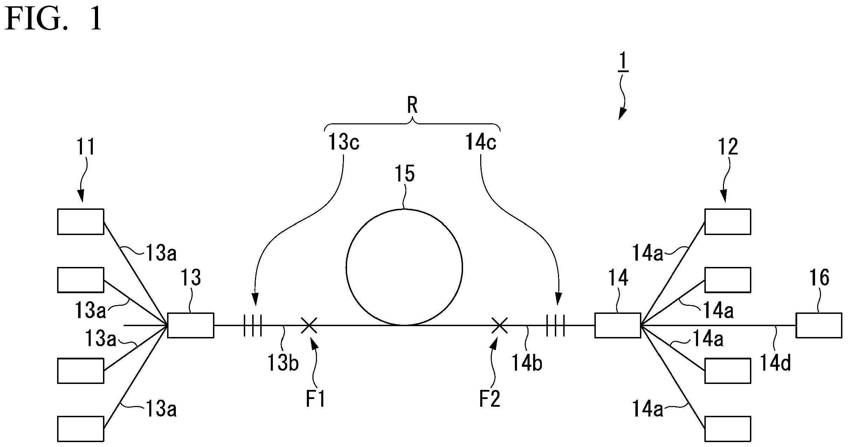

FIG. 1 is a view showing the main composition of a fiber laser device according to a first embodiment of the present invention. As shown in FIG. 1, the fiber laser device of the first embodiment includes a pumping light source 11 (first pumping light source), a pumping light source 12 (second pumping light source), a combiner 13 (first combining unit), a combiner 14 (second combining unit), an amplifying fiber 15 and an output end 16. This type of fiber laser device is, in other words, a bidirectional excitation type fiber laser device.

In the present application, there are cases where the pumping light source 11 side is referred to as the "front side", and the output end 16 side is referred to as the "rear side", as seen from the amplifying fiber 15. In FIG. 1, fusion spliced parts of various types of fibers are shown with marks "X". This fusion spliced part is actually protected by being disposed within a reinforcement part (omitted from figure). Here, the reinforcement part may be configured of, for example, a fiber housing body formed with a groove capable of housing optical fibers, a resin to fix various types of fibers to the fiber housing body in a state where fusion spliced parts are housed within the groove of the fiber housing body.

The pumping light source 11 outputs a pumping light (first pumping light) having a wavelength $\lambda 1$ (first wavelength). The wavelength $\lambda 1$ is a peak wavelength of pumping light output from the pumping light source 11. The pumping light source 11 is provided to forward excite the amplifying fiber 15. In FIG. 1, the number of the pumping light source 11 shown is four. However, according to the power of laser light (optical signal) outputted from the output end 16 of the fiber laser device 1, the number of the pumping light source 11 may be an arbitrary number. It is possible to use a laser diode, for example, as the pumping light source 11. The wavelength $\lambda 1$ of the pumping light outputted from the pumping light source 11 and details of the power are discussed later on.

The pumping light source 12 outputs a pumping light (second pumping light) having a wavelength $\lambda 2$ (second wavelength). The wavelength $\lambda 2$ is a peak wavelength of pumping light output from the pumping light source 12. The pumping light source 12 is provided to forward excite the amplifying fiber 15. In FIG. 1, the number of the pumping light source 12 shown is four. However, according to the power of the laser light (optical signal) outputted from the output end 16 fiber laser device 1, the number of the pumping light source 12 may be an arbitrary number. As with the pumping light source 11, it is possible to use a laser diode, for example, as the pumping light source 12. Details of the wavelength $\lambda 2$ of the pumping light outputted from the pumping light source 12 and the power are discussed later on.

The combiner 13 combines the pumping light outputted from each of the pumping light sources 11 to an end of a front side of the amplifying fiber 15 (first end of the amplifying fiber 15). Specifically, the combiner 13 includes a plurality of optical fibers 13a connected to each of the pumping light sources 11, and one optical fiber 13b with an end of a rear side fusion spliced to an end of a front side of the amplifying fiber 15 optically connected to the plurality of the optical fibers 13a. From hereon, the fusion spliced part of an optical fiber formed with an HR-FBG 13c (mentioned later on) and the amplifying fiber 15 is referred to as a "fusion spliced part F1". In the present embodiment, a fusion spliced part of the optical fiber 13b and the amplifying fiber 15 is referred to as the "fusion spliced part F1".

The HR-FBG 13c (High Reflectivity-Fiber Bragg Grating) is formed within the core of the optical fiber 13b. Out of the light that the active element of the amplifying fiber 15 emits in an excited state, the HR-FBG 13c is adjusted to reflect the light of the optical signal having wavelength $\lambda 0$ with about 100% reflectivity. The HR-FBG 13c is constructed to have a part with a high refractive index cyclically repeat along the longitudinal direction.

The combiner 14 combines the pumping light outputted from each of the pumping light sources 12 to an end of a rear side of the amplifying fiber 15 (a second end of the amplifying fiber 15), along with guiding a portion of the optical signal to the output end 16. Specifically, the combiner 14 includes a plurality of optical fibers 14a connected to each of the pumping light sources 12, and one optical fiber 14b with an end of a front side fusion spliced to an end of a rear side of the amplifying fiber 15 optically connected to the plurality of the optical fibers 14a. Combiner 14 includes a delivery fiber 14d optically connected to the optical fiber 14b. From hereon, the fusion spliced part of an optical fiber formed with an OC-FBG 14c (mentioned later on) and the amplifying fiber 15 is referred to as a "fusion spliced part F2". In the present embodiment, a fusion spliced part of the optical fiber 14b and the amplifying fiber 15 is referred to as the "fusion spliced part F2".

The OC-FBG 14c (Output Coupler-Fiber Bragg Grating) is formed within the core of the optical fiber 14b. The OC-FBG 14c has a similar structure to the HR-FBG 13c, except that the OC-FBG 14c is adjusted to reflect light at a lower reflectivity than light reflected by the HR-FBG 13c. For example, the OC-FBG 14c is adjusted to reflect the light of the optical signal having wavelength $\lambda 0$ with about 10 to 20% reflectivity.

The delivery fiber 14d transmits a portion of an optical signal amplified within the amplifying fiber 15. The delivery fiber 14d includes a core, a cladding that surrounds the core, and a coating that covers the cladding. As an example of the delivery fiber 14d, it is possible to use a single mode fiber. The delivery fiber 14d for example, may also be a multimode fiber, or a few-mode fiber.

The amplifying fiber 15 has a core with one type or two types of active elements added, a first cladding covering the core, a second cladding covering the first cladding, and a protecting cover covering the second cladding. In other words, the amplifying fiber 15 is a double cladding fiber. As the active elements added to the core, for example, rare earth metals such as erbium (Er), ytterbium (Yb), or niobium (Nd) and the like are used. The active elements added to the core of the amplifying fiber 15 are excited by the pumping light outputted from the pumping light sources 11 and 12.

It is possible to use silica glass and the like, as the core and the first cladding. It is possible to use a resin of a polymer or the like as the second cladding. It is possible to use resin material of acrylic resin or silicone resin or the like as the protecting cover. The amplifying fiber 15 is a few-mode fiber or a multimode fiber that is capable of transmitting a plurality of modes. The number that the few-mode fiber transmits, for example, is more than or equal to 2 and less than or equal to 25.

The end of the front side of the amplifying fiber 15 is fusion spliced with the end of the rear side of the optical fiber 13b, and the end of the rear side of the amplifying fiber 15 is connected to the end of the front side of the optical fiber 14b. Here, the HR-FBG 13c formed on the optical fiber 13b, the OC-FBG 14c formed on the optical fiber 14b, and the amplifying fiber 15 configure a resonator R. The resonator R resonates lights emitted from the active elements excited by the pumping light outputted from the pumping light sources 11 and 12, and thereby generates an optical signal which is a laser light.

The optical signal reflected by the HR-FBG 13c and the OC-FBG 14c within the amplifying fiber 15 propagates back and forth in the longitudinal direction of the amplifying fiber 15. The optical signal becomes an amplified laser light due to this back and forth propagation. In this manner, the amplified optical signal (laser light) is generated within the resonator R.

The output end 16 is connected to the end of the rear side of the delivery fiber 14d, and externally outputs the laser light transmitted by the delivery fiber 14d. The output end 16 includes a columnar body (light-transmitting columnar element) that optically transmits laser light transmitted by the delivery fiber 14d. This element is in other words, called an end cap.

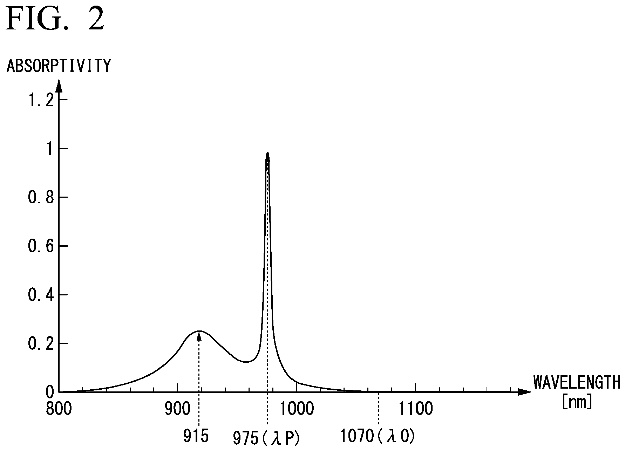

FIG. 2 is a figure showing an example of the absorption spectrum of the active element added to the amplifying fiber in the first embodiment of the present invention. The absorption spectrum exemplified in FIG. 2 is the absorption spectrum of ytterbium (Yb). As shown in FIG. 2, in the absorption spectrum of ytterbium (Yb) a large absorption peak appears in the vicinity of a wavelength of 975nm and a wavelength of 915nm. The absorption peak that appears in the vicinity of the wavelength of 975nm is the largest absorptivity, while the absorption peak that appears in the vicinity of the wavelength 915nm has a smaller absorptivity than the absorption peak that appears in the vicinity of the wavelength 975nm.

In the present embodiment of the fiber laser device 1, for example, a resonant wavelength of the resonator R is set around about 1060 to 1080nm. In other words, in the present embodiment, the wavelength $\lambda 0$ of the optical signal (laser light) externally outputted from the output end 16 of the fiber laser device 1 is set around about 1060 to 1080nm. As shown in FIG. 2, the wavelength $\lambda 0$ of the optical signal, for example, is 1070nm, a wavelength mostly not absorbed by the active element added to the amplifying fiber 15, ytterbium (Yb).

In the present embodiment, wavelength $\lambda 1$ of the pumping light outputted from the pumping light source 11 and wavelength $\lambda 2$ of the pumping light outputted from the pumping light source 12 are set so as to satisfy equations (1) and (2) below.

[Equation 1]

$$\alpha(\lambda 1) < \alpha(\lambda 2) \qquad \cdots (1)$$

[Equation 2]

$$\lambda 2 < \lambda 1 < \lambda 0 \qquad \cdots (2)$$

In other words, as shown in the equation (1) above, the wavelengths $\lambda 1$ and $\lambda 2$ are set such that the absorptivity $\alpha(\lambda 1)$ of the active element in the wavelength $\lambda 1$ is less than the absorptivity $\alpha(\lambda 2)$ of the active element in the wavelength $\lambda 2$. As shown in the equation (2) above, the wavelengths $\lambda 1$ and $\lambda 2$ are set such that wavelengths $\lambda 1$ and $\lambda 2$ are shorter than the wavelength $\lambda 0$ of the optical signal, with wavelength $\lambda 1$ being longer than wavelength $\lambda 2$. Settings are done in this manner so as to suppress the degradation of the beam quality due to the TMI phenomenon.

In the case that the equation (1) above is satisfied, it is possible to lower the absorptivity of the pumping light per unit length around the fusion spliced part F 1 of the amplifying fiber 15 so that the absorptivity of the pumping light per unit length around the fusion spliced part F 1 of the amplifying fiber 15 is less than the absorptivity of the pumping light per unit length in the vicinity of the fusion spliced part F2 of the amplifying fiber 15. From this, since the temperature rise around the fusion spliced part F 1 of the amplifying fiber 15 is suppressed, it is possible to prevent coupling between the fundamental mode and the higher order mode, suppressing degradation of the beam quality due to the TMI phenomenon.

In equation (2) above, the wavelengths $\lambda 1$ and $\lambda 2$ are set to be shorter than the wavelength $\lambda 0$ of the optical signal. This is due to the fact that, to obtain the optical signal with the wavelength $\lambda 0$, a pumping light (pumping light of the wavelengths $\lambda 1$ and $\lambda 2$) having a higher energy than the energy of the optical signal is needed. In the equation (2) above, the wavelength $\lambda 1$ is set to be longer than the wavelength $\lambda 2$ due to the fact that, by making the wavelength $\lambda 1$ closer to the wavelength $\lambda 0$ of the optical signal, it is possible to suppress the temperature rise due to the quantum defects around the fusion spliced part F1 of the amplifying fiber 15.

Here, an amount of heat Q [W/m] per unit length in the amplifying fiber 15 is shown in an equation (3) below.
[Equation 3]

$$Q = 0.230 \times \int P_p\left(\lambda_p\right) \times A\left(\lambda_p\right) \times \left(1 - \frac{\lambda_p}{\lambda_s}\right) d\lambda_p \qquad \cdots (3)$$

$P_p(\lambda_P)$ in the equation (3) above is a power spectrum [W] of the pumping light, and $A(\lambda_P)$ is a spectrum of an amount of absorption [dB/m] of the pumping light per unit length of the amplifying fiber 15. $\lambda_P$ is a wavelength [nm] of a pumping light, $\lambda_S$ is a wavelength [nm] of an optical signal. The coefficient 0.230 on the right hand side is $0.1 \times \ln(10)$, and is a coefficient of conversion from linear to [dB].

Referring to the equation (3) above, it can be seen that the amount of heat Q per unit length in the amplifying fiber 15 is proportional to the power of the pumping light and an amount of absorption (absorptivity) per unit length. Here, the term $(1 - \lambda_P/\lambda_S)$ on the right hand side of the equation (3) is caused by the quantum defects. Since the relation $\lambda_P < \lambda_S$ exists, it is possible to further reduce the amount of heat caused by quantum defects the longer the wavelength $\lambda_P$ becomes. Therefore, in the present embodiment, the wavelength $\lambda 1$ is set to be longer than the wavelength $\lambda 2$, and by making the wavelength $\lambda 1$ closer to the wavelength $\lambda 0$ of the optical signal, it is possible to suppress the temperature rise due to the quantum defects around the fusion spliced part F1 of the amplifying fiber 15.

It is preferable that the wavelengths $\lambda 1$ and $\lambda 2$ of the pumping light satisfy the equations (1) and (2) mentioned above, while satisfying any one of the relationships (A) to (C) below:

(A) The wavelength $\lambda 2$ coincides with the wavelength $\lambda_P$ of the highest absorptivity of the active element.
(B) The wavelength $\lambda_P$ of the highest absorptivity of the active element is between the wavelength $\lambda 1$ and the wavelength $\lambda 2$.
(C) The wavelengths $\lambda 1$ and $\lambda 2$ are longer than the wavelength $\lambda_P$ at which the active element has the highest absorptivity.

Where the above relationship (A) is satisfied, the wavelength $\lambda 2$ of the pumping light outputted from the pumping light source 12 coincides with the wavelength $\lambda_P$ of the highest absorptivity of the active element. For this reason, it is possible to suppress the temperature rise around the fusion spliced part F1 of the amplifying fiber 15, while efficiently absorbing the pumping light outputted from the pumping light source 12. On the example shown in FIG. 2, the wavelength $\lambda_P$ of the highest absorptivity of the active element is in the vicinity of 975nm. In the case the above relationship (A) is satisfied, the wavelength $\lambda 2$ of the pumping light outputted from the pumping light source 12 is set to be in the vicinity of 975nm. The above word "coincides" means that the difference between the wavelength $\lambda 2$ and the wavelength $\lambda_P$ is within +/-1nm.

Where the above relationship (B) is satisfied, along with suppressing the temperature rise in the vicinity of the fusion spliced part F1 of the amplifying fiber 15, the temperature rise in the vicinity of the fusion spliced part F2 is also suppressed, while efficiently absorbing the pumping light outputted from the pumping light sources 11 and 12. On the example shown in FIG. 2, in the case the above relationship (B) is satisfied, the wavelength $\lambda 1$ of the pumping light outputted from the pumping light source 11 is set to be in the vicinity of 978nm, and the wavelength $\lambda 2$ of the pumping light outputted from the pumping light source 12 is set to be in the vicinity of 973nm. Attention needs to be paid to the fact that the particular wavelengths brought up here are only done so as an example.

Where the above relationship (C) is satisfied, compared to the case of satisfying the above relationship (A), it is possible to decrease the absorptivity of the pumping light outputted from the pumping light sources 11 and 12. It is also possible to bring the wavelengths $\lambda 1$ and $\lambda 2$ of the pumping light outputted from the pumping light sources 11 and 12 closer to the wavelength $\lambda 0$ of the optical signal. For this reason, it is possible to suppress the temperature rise in the vicinity of the fusion spliced parts F 1 and F2 of the amplifying fiber 15 more than the case where the above relationship (A) is satisfied. On the example shown in FIG. 2, in the case the above relationship (C) is satisfied, the wavelength $\lambda 1$ of the pumping light outputted from the pumping light source 11 is set to be in the vicinity of 985nm, and the wavelength $\lambda 2$ of the pumping light outputted from the pumping light source 12 is set to be in the vicinity of 980nm. Attention needs to be paid to the fact that the particular wavelengths brought up here are only done so as an example.

It is preferable the difference between the wavelength $\lambda 1$ of the pumping light outputted from the pumping light source 11 and the wavelength $\lambda 2$ of the pumping light outputted from the pumping light source 12 be more than or equal to 1nm and less than or equal to 5nm. The length of the amplifying fiber 15 is set to a length where it is possible to sufficiently absorb (for example, 95% absorption) the pumping light of the wavelength $\lambda 1$ with low absorptivity. If the difference between the wavelengths $\lambda 1$ and $\lambda 2$ is more than or equal to 1nm and less than or equal to 5nm, since the absorptivity of the pumping light of the wavelength λ1 is not extremely small compared to the absorptivity of the pumping light of the wavelength λ2, to sufficiently absorb the pumping light of the wavelength λ1 with low absorptivity, it is possible to avoid the case where the length of the amplifying fiber 15 is made to be extremely long. From this, it is possible to suppress the occurrence of stimulated Raman scattering.

From the above, in the present embodiment, along with supplying the pumping light of the wavelength λ1 to the amplifying fiber 15 from the end side of the front side of the amplifying fiber 15 (optical fiber with the active element added to the core), the pumping light of the wavelength λ2 is supplied to the amplifying fiber 15 from the end side of the rear side of the amplifying fiber 15. Here, the absorptivity of the active element in the wavelength λ1 is less than the absorptivity of the active element in the wavelength λ2, the wavelengths λ1 and λ2 are shorter than the wavelength λ0 of the optical signal, and the wavelengths λ1 is set to be longer than the wavelength λ2.

From this, it is possible to decrease the absorptivity of the pumping light per unit length of the fusion spliced part F1 of the amplifying fiber 15 to be less than the absorptivity of the pumping light per unit length of the fusion spliced part F2 of the amplifying fiber 15. As a result, the temperature rise around the fusion spliced part F1 of the amplifying fiber 15 is suppressed, making it possible to prevent coupling between the fundamental mode and the higher order mode, which in turn makes it is possible to suppress the degradation of the beam quality due to the TMI phenomenon.

(Second Embodiment)

Next, a fiber laser device according to a second embodiment of the present invention is explained. In the fiber laser device of the present invention, the supply method of the pumping light with respect to the amplifying fiber 15 is different. In the fiber laser device of the first embodiment mentioned above, the pumping light outputted from each of the pumping light sources 11 and 12 are supplied to the amplifying fiber 15 by the combiners 13 and 14. With respect to this, in the fiber laser device of the present embodiment, the supply differs by having the pumping light supplied by a side pump. Here, the side pump is a method to supply a pumping light to a supplied-fiber from a supplying fiber through a contact portion. The contact portion is a portion in which a cladding of the supplying fiber and a side surface of a cladding of the supplied fiber is made to partially contact, or be partially fusion spliced.

Specifically, in the fiber laser device of the present embodiment, the combiners 13 and 14 shown in FIG. 1 are omitted. The pumping light outputted from the pumping light source 11 (pumping light of the wavelength λ1) is supplied from the side pump (first coupler) to, for example, between the HR-FBG 13c and the fusion spliced part F1. The pumping light outputted from the pumping light source 12 (pumping light of the wavelength λ2) is supplied from the side pump (second coupler) to, for example, between the OC-FBG 14c and the fusion spliced part F2.

In the present embodiment, similarly to the first embodiment, the pumping light of the wavelength λ1 outputted from the pumping light source 11 is supplied from a first end side (fusion spliced part F1 side) of the amplifying fiber 15 to the amplifying fiber 15. The pumping light of the wavelength λ2 outputted from the pumping light source 12 is supplied from a second end side (fusion spliced part F2 side) of the amplifying fiber 15 to the amplifying fiber 15.

In the fiber laser device of the present invention, wavelengths λ1 and λ2 of the pumping light is made so as to satisfy any one of the relationships (A) to (C) mentioned earlier, while satisfying the equations (1) and (2). For this reason, in the present embodiment as well, the temperature rise around the fusion spliced part F1 of the amplifying fiber 15 is suppressed, making it possible to prevent coupling between the fundamental mode and the higher order mode. As a result, it is possible to suppress the degradation of the beam quality due to the TMI phenomenon.

(Third Embodiment)

Next, a fiber laser device according to a third embodiment of the present invention is explained. In the fiber laser device of the present embodiment, the optical fiber where the HR-FBG 13c and the OC-FBG 14c are formed is different. In the first embodiment of the present invention mentioned above, the HR-FBG 13c is formed in the core of the optical fiber 13b provided in the combiner 13, and the OC-FBG 14c is formed in the core of the optical fiber 14b provided in the combiner 14.

In a fiber laser device 1A of the present embodiment, the HR-FBG 13c is formed in a core of an optical fiber 13d other than the optical fiber 13b provided in the combiner 13, and the OC-FBG 14c is formed in a core of an optical fiber 14e other than the optical fiber 14b provided in the combiner 14.

In the present embodiment, a fusion spliced part of the optical fiber 13d and the amplifying fiber 15 is referred to as the "fusion spliced part F 1". A fusion spliced part of the optical fiber 14e and the amplifying fiber 15 is referred to as the "fusion spliced part F2".

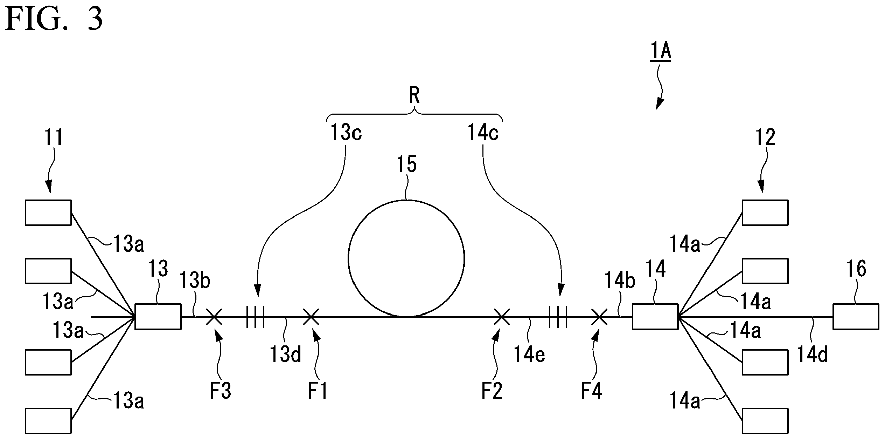

The end of the front side of the optical fiber 13d configured with the HR-FBG 13c is connected to the optical fiber 13b of the combiner 13, and the end of the rear side is connected to the end of the front side of the amplifying fiber 15. The end of the front side of the optical fiber 14e configured with the OC-FBG 14c is connected to the end of the rear side of the amplifying fiber 15, and the end of the rear side is connected to the optical fiber 14e of the combiner 14. In the fiber laser device 1A of the present embodiment, as shown in FIG. 3, a fusion spliced part F3 is formed between the optical fiber 13b and the HR-FBG 13c, and a fusion spliced part F4 is formed between the optical fiber 14b and the OC-FBG 14c.

In the fiber laser device 1A of the present invention, wavelengths λ1 and λ2 of the pumping light is made so as satisfy any one of the relationships (A) to (C) mentioned earlier, while satisfying the equations (1) and (2). For this reason, in the present embodiment as well, the temperature rise around the fusion spliced part F 1 of the amplifying fiber 15 is suppressed, making it possible to prevent coupling between the fundamental mode and the higher order mode. As a result, it possible to suppress the degradation of the beam quality due to the TMI phenomenon.

Although embodiments of the present invention have been explained, the present invention is by no means limited to the above mentioned embodiments, and the embodiments may be freely changed so long as the changes do not depart from the objective of the present invention. For example, in the above present embodiment, an example where the amplifying fiber 15 is forward excited by the pumping light of the wavelength λ1 and the amplifying fiber 15 is backward excited by the pumping light of the wavelength λ2 is explained. However, the pumping light (pumping light coupled to the amplifying fiber 15 from the first end side) that forward excites the amplifying fiber 15 and the pumping light (pumping light coupled to the amplifying fiber 15 from the second end side) that backward excites the amplifying fiber 15 may have the wavelengths λ1 and λ2 included.

For example, in the fiber laser device 1, 1A, out of the four pumping light sources 11 shown (for example, one), and out of the four pumping light sources 12 shown (for example, one) the configuration may be where they are interchanged. In such a configuration of a fiber laser device, along with having the amplifying fiber 15 be forward excited by a pumping light that includes the wavelengths λ1 and λ2, the amplifying fiber 15 is backward excited by a pumping light that includes the wavelengths λ1 and λ2.

In such a configuration of the fiber laser device, to suppress the degradation of the beam quality due to the TMI phenomenon mentioned earlier, it is preferable that the relationship (a) or (b) below be satisfied.

(a) The case where the power of the pumping light that forward excites the amplifying fiber 15 and the power that backward excites the amplifying fiber 15 are the same, the amount of heat around the fusion spliced part F1 of the amplifying fiber 15 is smaller than the amount of heat around the fusion spliced part F2.

(b) The case where the power of the pumping light that forward excites the amplifying fiber 15 is less than the power of the pumping light that backward excites the amplifying fiber 15.

In the case where the above relationships (a) or (b) is satisfied, the amount of heat around the fusion spliced part F1 of the amplifying fiber 15 becomes smaller than the amount of heat around the fusion spliced part F2. From this, the temperature rise around the fusion spliced part F1 of the amplifying fiber 15 is suppressed, making it possible to prevent coupling between the fundamental mode and the higher order mode. As a result, it is possible to suppress the degradation of the beam quality due to the TMI phenomenon.

Although the embodiments of the fiber laser device 1, 1A mentioned earlier are configured to include one output end 16, it is possible to further connect an optical fiber and the like to the end of the output end 16. The end of the output end 16 may be a configuration where the end of the output end 16 is connected to a beam combiner, where a plurality of laser lights from a plurality of laser devices are bundled.

[Reference Sign List]

1, 1A Fiber Laser Device
11 Pumping light Source
12 Pumping light Source
13c HR-FBG
14 Combiner
14c OC-FBG
15 Amplifying Fiber
16 Output End

**Claims**

**1.** A fiber laser device comprising:

a first pumping light source that outputs a first pumping light of a first wavelength;

a second pumping light source that outputs a second pumping light of a second wavelength that is different from the first wavelength;

an amplifying fiber that includes a core in which an active element is added, the active element to be excited by the first pumping light and the second pumping light;

an HR-FBG that is provided in a first end side of the amplifying fiber;

an OC-FBG that is provided in a second end side of the amplifying fiber, having a reflectance lower than a reflectance of the HR-FBG;

a first coupler that couples the first pumping light to the amplifying fiber from the first end side;

a second coupler that couples the second pumping light to the amplifying fiber from the second end side, and an output end that outputs a laser light amplified by the amplifying fiber and passed through the OC-FBG, wherein an absorptivity of the active element at the first wavelength is lower than an absorptivity of the active element at the second wavelength,

the first wavelength and the second wavelength are shorter than the wavelength of the laser light, and

the first wavelength is longer than the second wavelength.

2. The fiber laser device according to Claim 1, wherein
the second wavelength coincides with a wavelength at which the active element has the highest absorptivity.

3. The fiber laser device according to Claim 1, wherein
a wavelength at which the active element has the highest absorptivity is a wavelength between the first wavelength and the second wavelength.

4. The fiber laser device according to Claim 1, wherein
the first wavelength and the second wavelength are longer than a wavelength at which the active element has the highest absorptivity.

5. The fiber laser device according to any one of Claims 1 to 4, wherein
a difference between the first wavelength and the second wavelength is more than or equal 1nm, and less than or equal to 5nm.

6. The fiber laser device according to any one of Claims 1 to 5, wherein
when a power of a pumping light coupled to the amplifying fiber from the first end side and a power of a pumping light coupled to the amplifying fiber from the second end side are the same, a heating value at the first end of the amplifying fiber is less than a heating value at the second end of the amplifying fiber.

7. The fiber laser device according to any one of Claims 1 to 5, wherein
a power of a pumping light coupled to the amplifying fiber from the first end side is less than a power of a pumping light coupled to the amplifying fiber from the second end side.

EP 4 220 872 A1

FIG. 1

FIG. 2

FIG. 3

EP 4 220 872 A1

## INTERNATIONAL SEARCH REPORT

| International application No. |
|---|
| **PCT/JP2021/027692** |

**A. CLASSIFICATION OF SUBJECT MATTER**

*H01S 3/067*(2006.01)i
FI:   H01S3/067

According to International Patent Classification (IPC) or to both national classification and IPC

**B. FIELDS SEARCHED**

Minimum documentation searched (classification system followed by classification symbols)

H01S3/00-3/02, 3/04-3/0959, 3/098-3/102, 3/105-3/131, 3/136-3/213, 3/23-4/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 8-307000 A (MATSUSHITA ELECTRIC INDUSTRIAL CO., LTD.) 22 November 1996 (1996-11-22)<br>entire text, all drawings | 1-7 |
| A | JP 6731099 B1 (FUJIKURA LTD.) 29 July 2020 (2020-07-29)<br>entire text, all drawings | 1-7 |
| A | JP 2018-125406 A (FUJIKURA LTD.) 09 August 2018 (2018-08-09)<br>entire text, all drawings | 1-7 |
| A | JP 2006-245334 A (NIPPON TELEGRAPH & TELEPHONE CORP.) 14 September 2006 (2006-09-14)<br>entire text, all drawings | 1-7 |
| A | JP 2007-318013 A (SUMITOMO ELECTRIC INDUSTRIES LTD.) 06 December 2007 (2007-12-06)<br>entire text, all drawings | 1-7 |
| A | US 2015/0372442 A1 (OFS FITEL, LLC) 24 December 2015 (2015-12-24)<br>entire text, all drawings | 1-7 |

☑ Further documents are listed in the continuation of Box C.    ☑ See patent family annex.

| * Special categories of cited documents: |
|---|
| "A" document defining the general state of the art which is not considered to be of particular relevance |
| "E" earlier application or patent but published on or after the international filing date |
| "L" document which may throw doubts on priority claim(s) or which is cited to establish the publication date of another citation or other special reason (as specified) |
| "O" document referring to an oral disclosure, use, exhibition or other means |
| "P" document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **17 September 2021** | **28 September 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2021/027692** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 102801091 A (BEIJING UNIVERSITY OF CHEMICAL TECHNOLOGY) 28 November 2012 (2012-11-28) entire text, all drawings | 1-7 |

Form PCT/ISA/210 (second sheet) (January 2015)

## INTERNATIONAL SEARCH REPORT
### Information on patent family members

International application No.

**PCT/JP2021/027692**

| Patent document cited in search report | | | Publication date (day/month/year) | Patent family member(s) | | | Publication date (day/month/year) |
|---|---|---|---|---|---|---|---|
| JP | 8-307000 | A | 22 November 1996 | US | 5659558 | A | |
| JP | 6731099 | B1 | 29 July 2020 | WO | 2021/014895 | A1 | |
| JP | 2018-125406 | A | 09 August 2018 | US | 2020/0036154 | A1 | |
| | | | | EP | 3579360 | A1 | |
| | | | | CN | 110249490 | A | |
| JP | 2006-245334 | A | 14 September 2006 | (Family: none) | | | |
| JP | 2007-318013 | A | 06 December 2007 | (Family: none) | | | |
| US | 2015/0372442 | A1 | 24 December 2015 | (Family: none) | | | |
| CN | 102801091 | A | 28 November 2012 | (Family: none) | | | |

Form PCT/ISA/210 (patent family annex) (January 2015)

**EP 4 220 872 A1**

REFERENCES CITED IN THE DESCRIPTION

**Patent documents cited in the description**

- JP 2020159746 A
- JP 2018041792 A